# EUROPEAN PATENT SPECIFICATION

(11) **EP 4 005 691 B1**
(45) Date of publication and mention of the grant of the patent: **31.01.2024**
(21) Application number: 21209630.9
(22) Date of filing: 22.11.2021
(51) Int. Cl.: B08B 9/08

(54) **LABEL PEELING DEVICE AND LABEL PEELING METHOD**
ETIKETTENABLÖSUNGSVORRICHTUNG UND ETIKETTENABLÖSUNGSVERFAHREN
DISPOSITIF ET PROCÉDÉ DE PELAGE D'ÉTIQUETTE

(30) Priority: 30.11.2020 JP 2020198644
(43) Date of publication of application: 01.06.2022
(73) Proprietor: Aoi Seiki Co., Ltd., Kumamoto-shi, Kumamoto 860-0851 (JP)
(72) Inventor: ITOH, Teruaki, Kumamoto-shi, Kumamoto (JP)
(74) Representative: van Dam, Vincent

(56) References cited:
- US-A- 5 372 672
- US-A- 5 885 401
- US-B1- 8 479 797

## Description

### FIELD

The present invention relates to a label peeling device as defined in claim 1, and a label peeling method as defined in claim 4.

### BACKGROUND

As preprocessing of processing for various kinds of blood tests such as biochemical analyses, for example, an image of a specimen container is acquired and a pre-test condition of the specimen is detected based on the image. For example, the specimen container is made of a transparent material, such as glass. In general, a label indicating information on the specimen, such as identification information, is attached to an outer circumferential surface of the specimen container. Therefore, the label may be removed before an image of the specimen container is captured (Jpn. Pat. Appln. KOKAI Publication No. 2008-76185).

US 5 372 672 A discloses an apparatus for mechanically removing circumferentially complete labels from cylindrical external surfaces of successive containers, such as bottles, which are transported in upright or horizontal position past a removing station has a mechanical or pneumatic device which withdraws a portion of the label from the external surface of a container at the removing station.

US 8 479 797 B1 discloses an apparatus and method for removing labels from surfaces, especially from pharmaceutical vials. Each vial is brought into a travel path where it is moved forward by a linear driver. The vial is first pushed through a circular array of slitter blades to create a series of longitudinal slits in the label. The vial is next pushed through a circular array of scraper blades that remove the label segments between each pair of slits. The label segment residue is discarded through a vacuum system.

US 5 885 401 A discloses a process and a device for removing shrinking casings or encircling labels from containers, particularly bottles, glasses, cans, or the like, in which, first of all, a separating line which proceeds essentially transversely to the direction of circumference is produced and the shrinking casing or the encircling label is then removed by means of a fluid stream which is directed against the container.

As a method for peeling a label, a cutter, such as an ultrasonic cutter, is applied to a side of the specimen container to incise the label. The label peeling process requires that only the label be peeled without cause of damage to the specimen container. However, problems may occur leading to complications with position adjustment and operation.

Therefore, an object of the present invention is to provide a label peeling device and a label peeling method that can prevent specimen containers from being damaged.

### BRIEF DESCRIPTION OF THE DRAWINGS

FIG. 1 is a front view of a label peeling device according to a first embodiment.
FIG. 2 is a side view of the label peeling device according to the embodiment.
FIG. 3 is an explanatory view showing an appearance of a specimen container, which is a test target of a specimen processing apparatus.
FIG. 4 is a perspective view showing a configuration of a cutter supply portion of the label peeling device according to the embodiment.
FIG. 5 is a perspective view showing a configuration of the cutter supply portion of the label peeling device.
FIG. 6 is a perspective view showing a configuration of a peeling portion of the label peeling device.
FIG. 7 is a perspective view showing a configuration of a peeling portion of the label peeling device.
FIG. 8 is a side view showing a configuration of a part of the peeling portion of the label peeling device.
FIG. 9 is a perspective view showing configurations of the peeling portion and a cutter recovery portion of the label peeling device.
FIG. 10 is a plan view showing a configuration of a specimen processing unit according to another embodiment.

### DETAILED DESCRIPTION

### [First Embodiment]

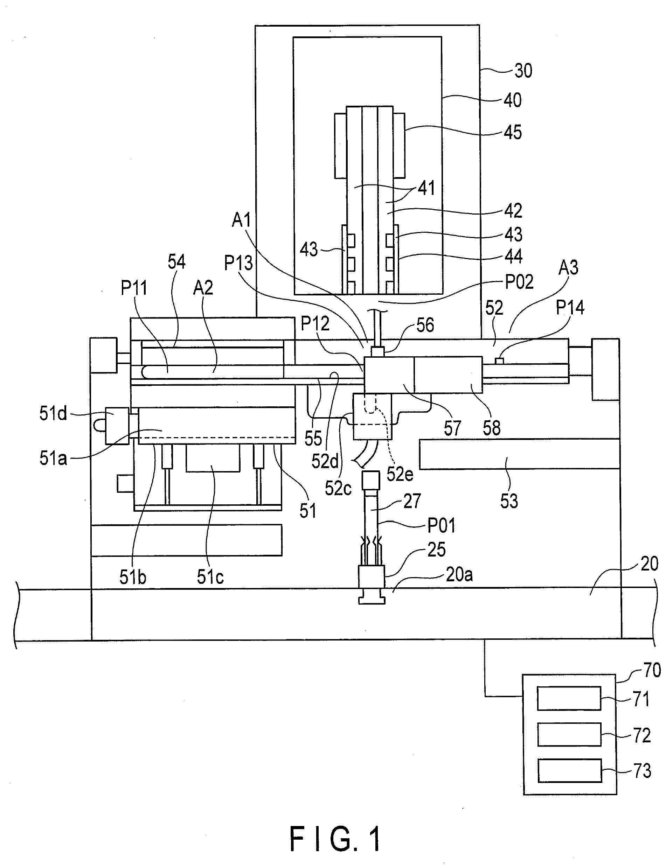

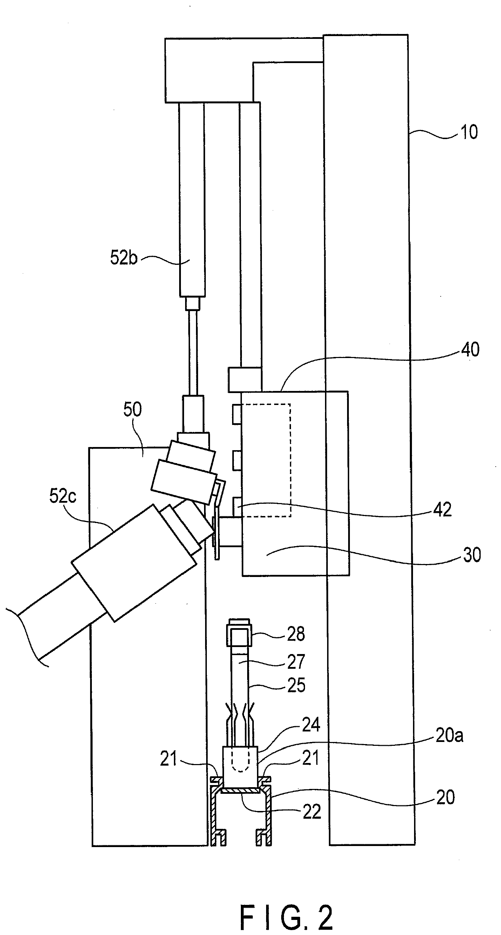

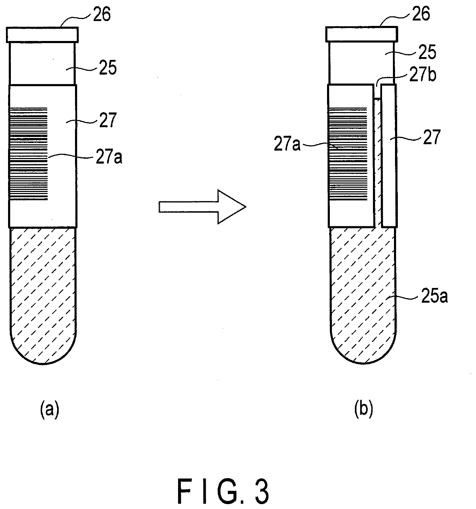

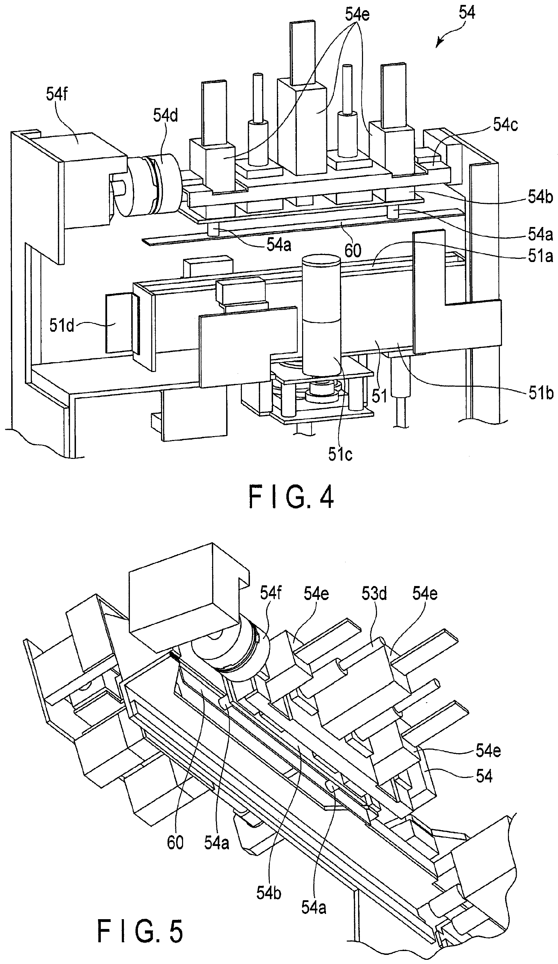

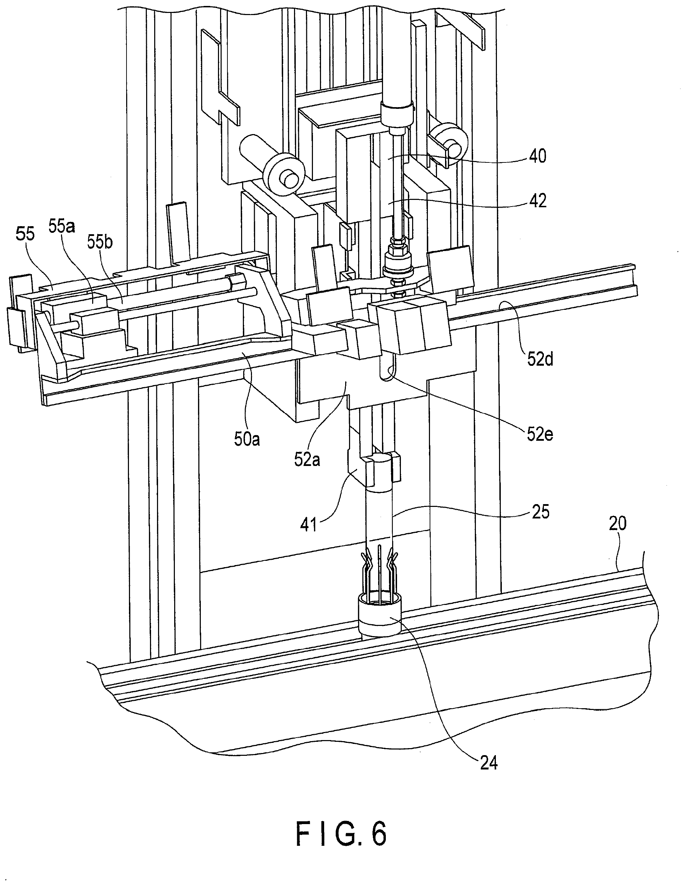

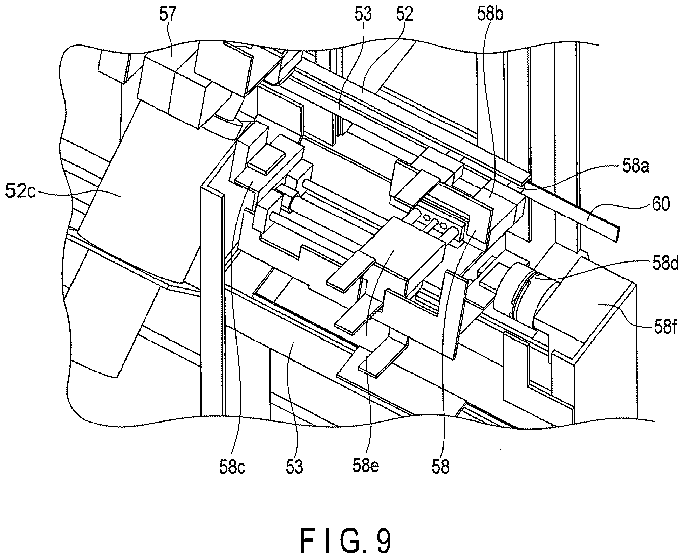

Embodiments of a label peeling device as a specimen processing apparatus and a label peeling method as a specimen processing method according to the present invention will be described with reference to the drawings. FIG. 1 and FIG. 2 is a front view and a side view showing a configuration of a specimen processing apparatus according to the first embodiment of the present invention. FIG. 3 is an explanatory view showing an appearance of a specimen container. FIG. 4 to FIG. 9 are explanatory views showing a specimen processing apparatus and a specimen processing method. FIG. 4 and FIG. 5 show a cutter supply portion. FIG. 6 to FIG. 8 show a peeling portion. FIG. 9 shows a cutter recovery portion. In the drawings, arrows X, Y, and Z respectively represent three directions perpendicular to one another: an X axis corresponds to a first direction, which is a conveyance direction through a conveyance pathway; a Y axis corresponds to a width direction of the conveyance pathway, and a Z axis corresponds to a vertical direction.

As shown in FIG. 1 and FIG. 2, a specimen processing apparatus 10 is a preprocessing apparatus which detects a condition of a specimen in advance before analyzing the specimen. The specimen processing apparatus 10 includes a conveyance device 20, a label peeling device 30, and a control device 70.

The conveyance device 20 conveys a specimen container 25 along a predetermined conveyance pathway 20a and is constituted of a conveyor-type holder conveyance mechanism, for example, provided below a peeling position. The conveyance device 20 specifically includes a pair of guide rails 21, a conveyor belt 22, and a belt feed mechanism. The paired guide rails 21 are disposed at a predetermined width along the conveyance pathway 20a extending in the X axis direction in FIG. 1.

The conveyor belt 22 is arranged between the guide rails 21 along the conveyance pathway 20a. The belt feed mechanism is a conveyor roller connected to a driving source such as a motor, and rotationally drives the conveyor belt 22 on the rear side thereof to feed the conveyor belt 22.

The conveyance device 20 conveys a holder 24 holding the specimen container 25 along the conveyance pathway 20a via feed motion of the conveyor belt 22. By means of various processing devices such as the label peeling device 30 disposed along the conveyance pathway 20a, the specimen container 25 or a specimen 25a is subjected to various processing.

The holder 24 holding the specimen container 25 is supported in an upright state between the pair of guide rails 21, and conveyed as the conveyor belt 22 moves. The specimen container 25 is, for example as shown in FIG. 3, a test tube formed of a transparent cylindrical body, an upper end thereof being open and a lower end thereof being closed to contain a specimen such as blood serum. For example, the specimen container 25 is made of transparent material, such as glass or resin. A label 27 is attached to an outer circumferential surface of the specimen container 25 by a bond or adhesive. The label 27 shows a bar code or character representing various kinds of indication information such as identification information of the specimen 25a. The indication information includes, for example, a name or a hospital ward representing the origin of the specimen, various numbers, etc.

The specimen 25a in the specimen container 25 is separated into a blood clot layer, a separating medium (silicone) layer, and a blood serum layer, the three layers being arranged sequentially from the lower side in the order named. A first interface is formed between the blood clot layer and the separating medium layer. A second interface is formed between the separating medium layer and the blood serum layer. A specimen liquid surface is formed on the blood serum layer.

The label peeling device 30 is configured to peel at least a part of the label 27 attached to the outer circumferential surface of the specimen container 25. The label peeling device 30 includes a container moving device 40 as a container holding portion, and a cutter moving device 50. In this description, peeling a label includes shaving off a label.

The container moving device 40 shown in FIGS. 1, 2, 6, and 8 is disposed on, for example, one side of the conveyance pathway 20a. The container moving device 40 includes, for example, a chuck portion 42 as a chuck device including a pair of openable and closable arms 41, a press portion 44 including a pair of openable and closable press plates 43, and a container drive portion 45 including a drive mechanism configured to drive the chuck portion 42 and the press portion 44. For example, the container drive portion 45 includes a drive cylinder configured to open and close a pair of press plates 43 of the press portion 44 or the pair of arms 41 of the chuck portion 42 by reciprocal motion in the X-axis direction, a drive cylinder configured to reciprocate the chuck portion 42 in the Y-axis direction, and a drive cylinder configured to reciprocate the chuck portion 42 in the Z-axis direction. The container moving device 40 opens and closes the pair of arms 41 of the chuck portion 42 under the control of a controller 71, and holds a head portion of the specimen container 25 held by the holder 24 at a pickup position P01. Furthermore, under the control of the controller 71, the container moving device 40 moves up the chuck portion 42 holding the specimen container, moves it forward in the Y-axis direction, locates it at a peeling position P02, and holds the side of the specimen container 25 at three positions by the press portion. After a peeling process, the container moving device 40 moves the chuck portion 42 backward in the Y-axis direction, and then down to return the specimen container 25 to the pickup position P01 of the conveyance pathway 20a, and opens the chuck portion 42.

The cutter moving device 50 is disposed on, for example, the other side of the conveyance pathway 20a. The cutter moving device 50 includes a supply box 51, a cutter holder 52 including a cutter rail 52a that movably supports the cutter, a recovery box 53, a transfer mechanism 54 configured to hold the cutter 60 in the supply box 51 and transfer the cutter 60 to a supply position P11 of the cutter rail 52a, a sending portion 55 configured to send a cutter from the supply position P11 to a standby position P12 on a secondary side, a moving portion 56 configured to move the cutter holder 52 up and down to reciprocate between an up position P13 and the standby position P12, a sending portion 57 configured to send the cutter to a downstream side and move it from the standby position P12 to a recovery position P14, and a transfer mechanism 58 configured to a transfer the cutter from the recovery position P14 to the recovery box 53. In the cutter moving device 50, a supply portion for supplying a new cutter 60 is constituted by the supply box 51, the transfer mechanism 54, and the sending portion 55. Furthermore, in the cutter moving device 50, a recovery portion for recovering a used cutter 60 is constituted by the recovery box 53, the sending portion 57, and the transfer mechanism 58. Thus, the cutter moving device 50 includes the supply portion for supplying a new cutter 60 and the recovery portion for recovering a used cutter, and serves as a cutter exchange device to automatically exchange cutters 60.

As shown in FIGS. 1 to 4, the supply box 51 includes a storage portion 51a having a box shape with an opening, for example at an upper side, a bottom plate 51b of the storage portion 51a, and a drive mechanism 51c configured to move the bottom plate 51b up and down. The supply box 51 is configured to store a plurality of, for example, 50 cutters. The cutter 60 is shaped as, for example, a thin, rectangular plate that is long in one direction. A plurality of, for example, about 50 cutters 60 can be set in a stacked state in the supply box 51. An openable and closable lid 51d is provided on one side wall of the storage portion 51a of the supply box 51, so that a user can insert the cutters 60 sideways. The bottom plate 51b is moved by the drive mechanism 51c, such as a DC motor. By moving the bottom plate 51b up at a predetermined timing, the cutter 60 is sent to the opening at the upper side. The opening at the upper side is provided with a sensor. When the sensor detects that there is no cutter in the supply box 51 and the bottom plate 51b has moved to the uppermost portion, the controller 71 causes the bottom plate 51b to move down and stop.

For example, a replacement blade for a commercially available cutter knife may be used as the cutter 60. The cutter 60 is a plate-like member, for example made of steel, and having a predetermined width and length, with a sharp cut edge formed over the entire length of one side edge portion, namely, the upper edge portion, at a leading end of the direction of movement in a peeling process.

The cutter 60 is placed to face a circumferential surface of the specimen container 25 in the peeling process, and held in a position in which the longitudinal direction of the cutter extends along the conveyance pathway. In the peeling process, the cutter 60 is set in a position inclined at a predetermined angle, so that the upper edge portion is brought into contact with, and pressed against, the surface of the specimen container and the other side edge portion, namely, the lower edge portion, is spaced apart from the surface. For example, the cutter 60 is set at an angle of 5 degrees or more and 30 degrees or less, preferably 10 degrees or more and 20 degrees or less, more preferably about 15 degrees, with respect to an axial direction of the specimen container. When the edge portion of the cutter 60 is brought into contact with the label 27 on the specimen container 25 and moves up and down, a part of the label 27 is shaved off to form a window portion 27b having a predetermined width.

As shown in FIGS. 1 to 8, the cutter holder 52 extends in the X-axis direction, and includes the cutter rail 52a including a groove portion 52d having openings at both ends in the X-axis direction and at a front side, a rail drive portion 52b configured to move the cutter rail 52a, and a suction portion 52c configured to suck shavings of the label. The cutter rail 52a is a frame member disposed between an up-and-down path for the cutter and a container passage, and slidably supports the cutter 60. The cutter rail 52a extends in the X-axis direction and includes the groove portion 52d to hold the cutter. The groove portion 52d maintains the cutter in a position in which the cutter is inclined at an angle of 10 degrees to 30 degrees with respect to the axial direction of the specimen container.

The cutter rail 52a includes a slit 52e that is cut and opened at a predetermined process position. The cutter 60 is exposed through the slit 52e toward the specimen container 25. The cutter rail 52a is configured to moveably hold the cutter 60, which is a commercially available cutter knife, in the groove portion 52d. The cutter rail 52a supports the cutter 60 at both sides of the slit 52e, while a part of the cutter 60 is exposed through the slit 52e toward the specimen container 25. Thus, both sides of the cutter 60 are held by the cutter rail 52a.

The groove portion 52d of the cutter rail 52a includes a central process area A1 in which the slit 52e is formed, a supply area A2 provided above the supply box 51 and formed to be continuous to one end of the process area A1, and a recovery area A3 provided above the recovery box 53 and formed to be continuous to the other end of the process area A1. The process areas A1, A2, and A3 are connected in the first direction to form a cutter path. The cutter path has a length about three times that of the cutter 60. The rail drive portion 52b includes an up-and-down cylinder as an up-and-down drive portion configured to move the cutter rail 52a up and down, and performs a peeling operation to peel the label by moving the cutter rail 52a up and down while the cutter 60 is being held. The process area A1 is located to face the moving path of the specimen container 25. In the conveyance direction, the supply area A2 is located on the primary side of the process area A1, and the recovery area A3 is located on the secondary side of the process area A1.

In other words, the cutter holder 52 detachably holds the cutter 60, and moves relative to the specimen container 25 at a position where the blade, namely the upper edge of the cutter 60, is brought into contact with a side surface of the held specimen container, thereby performing a peeling process of peeling the label attached to the side surface of the specimen container 25.

The suction portion 52c is provided on the cutter holder 52 and moves along with the cutter holder 52. The suction portion 52c includes a suction nozzle that has a suction port facing a portion near the lower end of the slit 52e and that sucks peeled pieces, such as shavings of the peeled label. The suction portion 52c sucks shavings of the peeled label in the cutter holder 52 and collects them in a dust box connected to the secondary side of the suction portion 52c through a duct.

The transfer mechanism 54 on the supply side includes a holding head 54b including a plurality of suction magnets 54a, a base 54c configured to support the holding head 54b to be rotatable around the X axis, and a transfer drive portion 54d configured to rotate the base 54c and to move it in the X-axis direction. The transfer drive portion 54d includes, for example, a cylinder 54e configured to move the holding head 54b up and down, and a rotary motor 54f configured to rotate the base 54c.

The transfer mechanism 54 on the supply side moves down while the holding head 54b is facing downward, sucks and holds the cutter 60 located on top of the supply box 51, moves up and rotates the holding head 54b, causing the holding head 54b to face the cutter path of the cutter rail 52a, and further moves the holding head 54b in the Y-axis direction to set the cutter 60 to the supply area A2 of the cutter rail 52a.

The sending portion 55 on the supply side includes an engaging portion 55a configured to engage the cutter 60 in the supply area A2, and a send drive portion 55b configured to move the engaging portion 55a along the X axis. The send drive portion 55b includes, for example, a rodless cylinder, and reciprocates in the X-axis direction, thereby sliding the engaging portion 55a to send the cutter 60 from the supply area A2 to the process area A1.

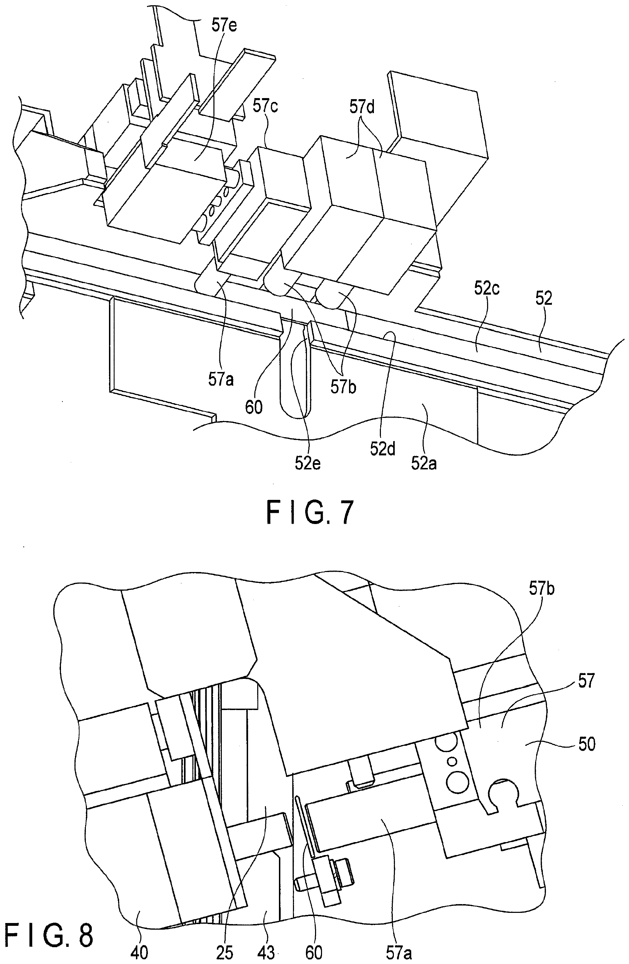

As shown in FIGS. 7 to 9, the sending portion 57 on the recovery side includes a holding head 57b including a plurality of suction magnets 57a, and a sending drive portion 57c configured to move the holding head 57b in the X-axis direction. The sending drive portion 57c includes, for example, a holding cylinder 57d configured to suck and hold the cutter and release the cutter by reciprocating the holding head 57b in the Y-axis direction, and a sending cylinder 57e configured to reciprocate the holding head 57b in the X-axis direction. The sending portion 57 repeats a series of operations of moving the holding head 57b forward in a direction of approaching the cutter 60 in the Y-axis direction and holding the cutter 60, moving the holding head 57b to a downstream side in the X-axis direction, moving the holding head 57b back in a direction away from the cutter 60 to a retreat position, and returning it to an upstream side. In this way, the sending portion sequentially sends the cutter 60 to the downstream side and moves it from the standby position P12 to the recovery position P14. For example, the cutter 60 is moved toward the recovery side by a predetermined distance each time the peeling process is performed a predetermined number of times, thereby sequentially shifting a portion of the blade located in the slit 52e that performs the peeling process. For example, each time the peeling process is performed 200 times, the blade is shifted by 5 mm. For example, if the length of the blade is 100 mm, when the sending process is performed 20 times, the cutter 60 is sent from the process area A1 to the recovery area A3 and placed at the recovery position P14.

The transfer mechanism 58 on the recovery side includes a holding head 58b including a plurality of suction magnets 58a, a base 58c configured to support the holding head 58b, and a transfer drive portion 58d configured to move the base 58c in the X-axis direction and rotate it. The transfer drive portion 58d includes, for example, a cylinder 58e configured to move the holding head 58b up and down, and a rotary motor 58f configured to rotate the base 58c. The transfer drive portion 58d transfers the cutter 60 from the recovery position P14 to the recovery box 53.

The recovery box 53 includes a storage portion having a box shape with an opening at, for example, an upper side.

The control device 70 includes the controller 71, a storage 72, and a user interface 73. The controller 71 is, for example, a computer. The controller 71 includes a processor or an integrated circuit (control circuit) including a central processing unit (CPU), an application specific integrated circuit (ASIC), or a field programmable gate array (FPGA), etc. and a storage medium such as a memory. The controller 71 may include only one integrated circuit or the like, or a plurality of integrated circuits or the like. The controller 71 performs processing by executing a program or the like stored in the storage medium or the like. The controller 71 controls operations of various drive mechanisms. For example, the controller 71 activates a container moving mechanism and a cutter moving mechanism at a predetermined timing, to relatively move the cutter and the container, so that the peeling process to peel the label can be performed at a position where the cutter and the container are in contact with each other. Furthermore, the controller 71 causes the cutter moving mechanism to send the cutters sequentially to the secondary side through the predetermined moving path, thereby performing a supply process for sequentially supplying the cutters from the supply box to the process position, a cutter sending process for shifting the position where the cutter contacts the specimen container at the process position, and a recovery process for recovering the cutters in the recovery box.

The storage portion 72 includes a hard disk or a NAND flash memory as a storage medium.

The interface 73 has a function of receiving data output from the various sensors etc. and temporarily storing the received data. The interface 73 also has a function of sending a control signal and a function of sending an ON/OFF control signal to the drive mechanism. In addition, the interface portion 73 has a function of transmitting various data to the analysis device, or an external device, for example, an information terminal such as a personal computer, or a printer.

The cutter can be attached to and detached from the apparatus. In addition, the shape of the cutter is not strictly limited; indeed, a wide variety of cutters are applicable to the apparatus. For example, a commercially available cutter knife can be used in the specimen processing apparatus according to the embodiment, reducing, therefore, the cost as compared to when an ultrasonic cutter is used. Furthermore, the cutter can be sequentially sent through a cutter moving path formed by the cutter rail. Therefore, shifting the position of the cutter allows for the sharpness of the cutter and consequently peeling performance to be maintained. Moreover, the cutters can be automatically exchanged so that high-performance and hygienic processing can be performed, and processing efficiency can be increased through reduction of human labor.

Furthermore, both sides of the cutter are supported by the cutter holder having a slit. Therefore, the cutter can be maintained at a predetermined contact angle relative to the specimen container, thereby maintaining the pressing force and the positional relationship with high accuracy. For example, a thin long rectangular cutter is used and placed so that its longitudinal direction is along the first (conveyance) direction perpendicular to the axial direction of the specimen container. The cutter is moved along the axial direction of the specimen container in a state in which the side of the cutter in the width direction is inclined at a predetermined angle relative to the axial direction of the specimen container. Thus, since the cutter can be maintained in a stable position and orientation, the operation of the cutter and the pressing force against the specimen container can be easily controlled. Specifically, as compared to a configuration in which, for example, the cutter is moved while the distal end of the blade is pressed against the specimen container and the proximal end thereof is supported, the change of the position of the distal end or the insufficiency of the pressing force due to a flexure of the blade or the like can be suppressed, and the appropriate position and pressing force can be ensured. Thus, since the depth of a cut can be maintained appropriately in the peeling process, for example, an excessively deep cut can be prevented. Therefore, the peeling process can be performed reliably at high speed, while damage to the specimen container can be prevented when the label is peeled.

The present invention is not limited to the embodiment described above. For example, the specific configuration for moving the cutter, the test processing sequences, and the details of the test processing can be variously modified within the scope of the appended claims. For example, the label peeling device 30 may include an image capturing device provided on the upstream side or the downstream side of a peeling processing portion, so that an image of the specimen container may be acquired.

The peeled part of the label 27 is not limited to the entire length of a portion of the label in the axial direction. For example, only a part of the length in the axial direction may be removed, or the entire label 27 may be peeled.

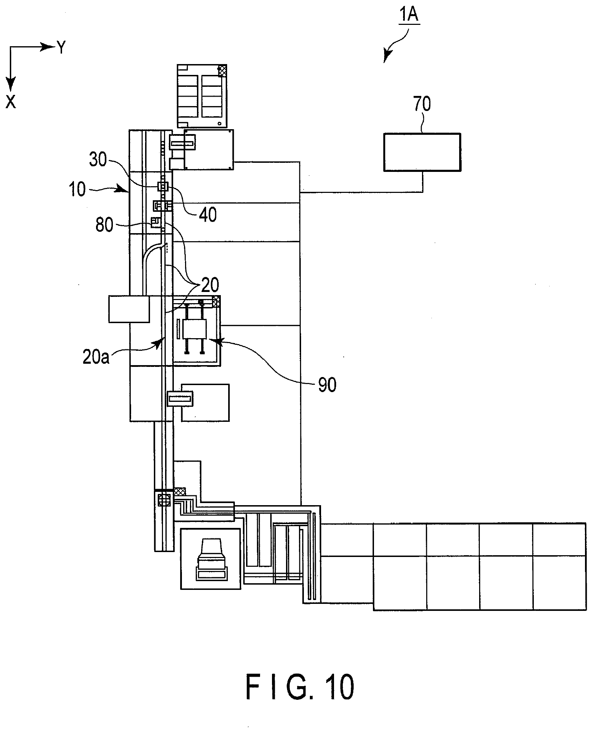

Furthermore, the specimen processing apparatus may include a processing device for performing another process along the conveyance pathway 20a of the conveyance device 20 on the upstream side or the downstream side of the label peeling device 30. For example, as another embodiment, other processing devices may be disposed beside the label peeling device 30, as shown in FIG. 10. For example, the specimen processing apparatus 10 shown in FIG. 10 includes an image capture device 80 and an analysis device 90 in the downstream side of the label peeling device 30. Processes can be sequentially performed while the specimen container 25 is conveyed through the conveyance pathway 20a, for example, by disposing the processing devices near or continuously to the conveyance device 20 or the conveyance pathway 20a. Furthermore, in addition to the image capture device, the processing apparatus may include various process devices, such as a process device configured to perform a sorting process or an analysis process based on information acquired from captured images, a read device configured to read a bar-code, a batch dispensing device, a stopper opening device, a stopper closing device, an analysis device, etc. Even in this case, the various process devices may be disposed along the conveyance pathway in combination with the label peeling device, so that a series of processes can be performed sequentially during the conveyance process.

In the embodiment described above, specimen processing is performed for each specimen container 25. However, the processing may be performed simultaneously for a plurality of specimen containers 25.

## Claims

1. A label peeling device (30) comprising:
a container holding portion (40) configured to hold a specimen container (25); and
a cutter holder (52) configured to detachably hold a cutter (60), to apply a blade of the cutter (60) to a side surface of the specimen container (25) held by the container holding portion (40) with a label (27) being attached to the side surface, and to move along an axial direction of the specimen container (25), thereby peeling the label (27) attached to the side surface of the specimen container (25); wherein:
the cutter (60) is a cutter knife blade extending in a first direction and having a blade portion on one side edge; and
the cutter holder (52) comprises a cutter rail (52a) extending in the first direction and configured to hold the cutter (60) so as to be movable in the first direction, and a rail drive portion (52b) configured to move the cutter rail (52a) in a direction different from the first direction, the cutter holder (52) configured to move the cutter (60) along the axial direction of the specimen container (25) while the cutter (60) is being pressed against a surface of the specimen container (25);
wherein the cutter rail (52a) forms, in the first direction, a cutter moving path including a process area (A1) to which the specimen container (25) is opposed, a supply area (A2) located on a primary side of the process area (A1), and a recovery area (A3) located on a secondary side of the process area (A1), and the label peeling device (30) comprises:
- a cutter sending portion (57) configured to move the cutter (60) in the first direction through the cutter rail (52a); and
- a cutter exchange device (50) including a supply portion configured to set the cutter (60) in the supply area (A2), and a
- recovery portion configured to recover the cutter (60) placed in the recovery area (A3).

2. The label peeling device (30) according to claim 1, further comprising a conveyance device (20) configured to convey the specimen container (25) along a conveyance pathway (20a) extending in the first direction, wherein:
the container holding portion (40) includes a chuck device (42) configured to hold and move the specimen container (25) on the conveyance pathway (20a); and
the cutter rail (52a) is disposed on a side of the specimen container (25) that faces the cutter (60), has an opening in the process area (A1), and is configured to hold the cutter (60) so as to keep it inclined with respect to the axial direction of the specimen container (25) at an angle of 10 degrees to 30 degrees.

3. The label peeling device (30) according to claim 1 or 2, wherein the cutter holder (52) includes a suction nozzle configured to suck peeled pieces of the peeled label.

4. A label peeling method using a label peeling device (30) according to claim 1, the method comprising:
supplying a cutter (60) to a process position;
in a state in which the cutter (60) is in contact with a specimen container (25), peeling a label (27) on the specimen container (25) by relatively moving the specimen container (25) and the cutter (60); and
after peeling the label (27), moving the cutter (60) from the process position to a recovery position (P14) to recover the cutter (60).

5. The label peeling device (30) according to claim 1, wherein the cutter rail (52a) includes a groove portion (52d) extending in the first direction and having openings at both ends in the first direction and at a front side;
wherein the cutter rail (52a) includes a slit (52e) opened at a predetermined position in the first direction, wherein the cutter (60) is exposed through the slit (52e) toward the specimen container (25);
wherein the cutter rail (52a) supports the cutter (60) at both sides of the slit (52e) while a part of the cutter (60) is exposed through the slit (52e) toward the specimen container (25) such that both sides of the cutter (60) are held by the cutter rail (52a).

6. The label peeling device (30) according to claim 5, wherein the cutter (60) is moved toward the recovery side by a predetermined distance each time the peeling process is performed a predetermined number of times, thereby sequentially shifting a portion of the blade located in the slit (52e) that performs the peeling process.

## Patentansprüche

1. Eine Etikettablösevorrichtung (30), die folgende Merkmale aufweist:
einen Behälterhalteabschnitt (40), der dazu ausgebildet ist, einen Probenbehälter (25) zu halten; und
eine Schneidevorrichtungshalterung (52), die dazu ausgebildet ist, eine Schneidevorrichtung (60) lösbar zu halten, um eine Schneide der Schneidevorrichtung (60) auf eine Seitenoberfläche des Probenbehälters (25) anzuwenden, der durch den Behälterhalteabschnitt (40) gehalten wird, wobei ein Etikett (27) an der Seitenoberfläche angebracht ist, und sich entlang einer Axialrichtung des Probenbehälters (25) zu bewegen, wodurch das Etikett (27), das an der Seitenoberfläche des Probenbehälters (25) angebracht ist, abgelöst wird; wobei:
die Schneidevorrichtung (60) eine Schneidevorrichtungsmesserschneide ist, die sich in einer ersten Richtung erstreckt und einen Schneidenabschnitt an einem Seitenrand aufweist; und
die Schneidevorrichtungshalterung (52) eine Schneidevorrichtungsschiene (52a) aufweist, die sich in der ersten Richtung erstreckt und dazu ausgebildet ist, die Schneidevorrichtung (60) so zu halten, dass diese in der ersten Richtung beweglich ist, sowie einen Schienenantriebsabschnitt (52b), der dazu ausgebildet ist, die Schneidevorrichtungsschiene (52a) in einer Richtung zu bewegen, die sich von der ersten Richtung unterscheidet, wobei die Schneidevorrichtungshalterung (52) dazu ausgebildet ist, die Schneidevorrichtung (60) entlang der Axialrichtung des Probenbehälters (25) zu bewegen, während die Schneidevorrichtung (60) gegen eine Oberfläche des Probenbehälters (25) gepresst wird;
wobei die Schneidevorrichtungsschiene (52a) in der ersten Richtung einen Schneidevorrichtungsbewegungsweg bildet, der einen Bearbeitungsbereich (A1), dem der Probenbehälter (25) gegenüberliegt, einen Zuführbereich (A2), der sich auf einer Primärseite des Bearbeitungsbereichs (A1) befindet, und einen Einholbereich (A3) aufweist, der sich auf einer Sekundärseite des Bearbeitungsbereichs (A1) befindet, und die Etikettablösevorrichtung (30) folgende Merkmale aufweist:
- einen Schneidevorrichtungsaussendeabschnitt (57), der dazu ausgebildet ist, die Schneidevorrichtung (60) in der ersten Richtung durch die Schneidevorrichtungsschiene (52a) zu bewegen; und
- eine Schneidevorrichtungsaustauschvorrichtung (50), die einen Zuführabschnitt aufweist, der dazu ausgebildet ist, die Schneidevorrichtung (60) in den Zuführbereich (A2) zu setzen, und einen
- Einholabschnitt, der dazu ausgebildet ist, die Schneidevorrichtung (60), die in dem Einholbereich (A3) platziert ist, einzuholen.

2. Die Etikettablösevorrichtung (30) gemäß Anspruch 1, die ferner eine Beförderungsvorrichtung (20) aufweist, die dazu ausgebildet ist, den Probenbehälter (25) entlang eines Beförderungswegs (20a) zu befördern, der sich in der ersten Richtung erstreckt, wobei:
der Behälterhalteabschnitt (40) eine Einspannvorrichtung (42) aufweist, die dazu ausgebildet ist, den Probenbehälter (25) an dem Beförderungsweg (20a) zu halten und zu bewegen; und
die Schneidevorrichtungsschiene (52a) auf einer Seite des Probenbehälters (25) angeordnet ist, die der Schneidevorrichtung (60) zugewandt ist, eine Öffnung in dem Bearbeitungsbereich (A1) aufweist und dazu ausgebildet ist, die Schneidevorrichtung (60) so zu halten, dass diese in Bezug auf die Axialrichtung des Probenbehälters (25) in einem Winkel von 10 Grad bis 30 Grad geneigt ist.

3. Die Etikettablösevorrichtung (30) gemäß Anspruch 1 oder 2, bei der die Schneidevorrichtungshalterung (52) eine Ansaugdüse aufweist, die dazu ausgebildet ist, abgelöste Stücke des abgelösten Etiketts anzusaugen.

4. Ein Etikettablöseverfahren unter Verwendung einer Etikettablösevorrichtung (30) gemäß Anspruch 1, wobei das Verfahren folgende Schritte aufweist:
Zuführen einer Schneidevorrichtung (60) zu einer Bearbeitungsposition;
in einem Zustand, in dem die Schneidevorrichtung (60) in Kontakt mit einem Probenbehälter (25) steht, Ablösen eines Etiketts (27) an dem Probenbehälter (25) durch relatives Bewegen des Probenbehälters (25) und der Schneidevorrichtung (60); und
nach Ablösen des Etiketts (27), Bewegen der Schneidevorrichtung (60) aus der Bearbeitungsposition in eine Einholposition (P14), um die Schneidevorrichtung (60) einzuholen.

5. Die Etikettablösevorrichtung (30) gemäß Anspruch 1, bei der die Schneidevorrichtungsschiene (52a) einen Rillenabschnitt (52d) aufweist, der sich in der ersten Richtung erstreckt und Öffnungen an beiden Enden in der ersten Richtung und an einer Vorderseite aufweist;
wobei die Schneidevorrichtungsschiene (52a) einen Schlitz (52e) aufweist, der an einer vorbestimmten Position in der ersten Richtung geöffnet ist, wobei die Schneidevorrichtung (60) durch den Schlitz (52e) in Richtung des Probenbehälters (25) freiliegt;
wobei die Schneidevorrichtungsschiene (52a) die Schneidevorrichtung (60) an beiden Seiten des Schlitzes (52e) trägt, während ein Teil der Schneidevorrichtung (60) durch den Schlitz (52e) in Richtung des Probenbehälters (25) derart freiliegt, dass beide Seiten der Schneidevorrichtung (60) durch die Schneidevorrichtungsschiene (52a) gehalten werden.

6. Die Etikettablösevorrichtung (30) gemäß Anspruch 5, bei der die Schneidevorrichtung (60) jedes Mal um eine vorbestimmte Entfernung in Richtung der Einholseite bewegt wird, wenn der Ablösevorgang eine vorbestimmte Anzahl von Malen durchgeführt ist, wodurch aufeinanderfolgend ein Abschnitt der Schneide verschoben wird, der sich in dem Schlitz (52e) befindet, der den Ablösevorgang durchführt.

## Revendications

1. Dispositif de pelage d'étiquette (30) comprenant :
une partie de maintien de récipient (40) configurée pour maintenir un récipient d'échantillon (25) ; et
un support de dispositif de coupe (52) configuré pour maintenir, de manière détachable, un dispositif de coupe (60), pour appliquer une lame du dispositif de coupe (60) sur une surface latérale du récipient d'échantillon (25) maintenu par la partie de maintien de récipient (40) avec une étiquette (27) qui est fixée sur la surface latérale, et pour se déplacer le long d'une direction axiale du récipient d'échantillon (25), pelant ainsi l'étiquette (27) fixée sur la surface latérale du récipient d'échantillon (25) ; dans lequel :
le dispositif de coupe (60) est une lame de couteau de dispositif de coupe s'étendant dans une première direction et ayant une partie de lame sur un bord latéral ; et
le support de dispositif de coupe (52) comprend un rail de dispositif de coupe (52a) s'étendant dans la première direction et configuré pour maintenir le dispositif de coupe (60) afin d'être mobile dans la première direction, et la partie d'entraînement de rail (52b) configurée pour déplacer le rail de dispositif de coupe (52a) dans une direction différente de la première direction, le support de dispositif de coupe (52) étant configuré pour déplacer le dispositif de coupe (60) le long de la direction axiale du récipient d'échantillon (25) alors que le dispositif de coupe (60) est comprimé contre une surface du récipient d'échantillon (25) ;
dans lequel le rail de dispositif de coupe (52a) forme, dans la première direction, une trajectoire de déplacement de dispositif de coupe comprenant une zone de traitement (A1) à laquelle le récipient d'échantillon (25) est opposé, une zone d'alimentation (A2) située sur un côté principal de la zone de traitement (A1), et une zone de récupération (A3) située sur un côté secondaire de la zone de traitement (A1), et le dispositif de pelage d'étiquette (30) comprend :
une partie d'expédition de dispositif de coupe (57) configurée pour déplacer le dispositif de coupe (60) dans la première direction par le biais du rail de dispositif de coupe (52a) ; et
un dispositif d'échange de dispositif de coupe (50) comprenant une partie d'alimentation configurée pour placer le dispositif de coupe (60) dans la zone d'alimentation (A2), et
une partie de récupération configurée pour récupérer le dispositif de coupe (60) placé dans la zone de récupération (A3).

2. Dispositif de pelage d'étiquette (30) selon la revendication 1, comprenant en outre un dispositif de transport (20) configuré pour transporter le récipient d'échantillon (25) le long d'une voie de transport (20a) s'étendant dans la première direction, dans lequel :
la partie de maintien de récipient (40) comprend un dispositif de mandrin (42) configuré pour maintenir et déplacer le récipient d'échantillon (25) sur la voie de transport (20a) ; et
le rail de dispositif de coupe (52a) est disposé sur un côté du récipient d'échantillon (25) qui fait face au dispositif de coupe (60), a une ouverture dans la zone de traitement (A1) et est configuré pour maintenir le dispositif de coupe (60) afin de le garder incliné par rapport à la direction axiale du récipient d'échantillon (25) à un angle de 10 degrés à 30 degrés.

3. Dispositif de pelage d'étiquette (30) selon la revendication 1 ou 2,
dans lequel le support de dispositif de coupe (52) comprend une buse d'aspiration configurée pour aspirer les morceaux pelés de l'étiquette pelée.

4. Procédé de pelage d'étiquette utilisant un dispositif de pelage d'étiquette (30) selon la revendication 1, le procédé comprenant les étapes suivantes :
fournir un dispositif de coupe (60) dans une position de traitement ;
dans un état dans lequel le dispositif de coupe (60) est en contact avec un récipient d'échantillon (25), peler une étiquette (27) sur le récipient d'échantillon (25) en déplaçant relativement le récipient d'échantillon (25) et le dispositif de coupe (60) ; et
après avoir pelé l'étiquette (27), déplacer le dispositif de coupe (60) de la position de traitement à une position de récupération (P14) pour récupérer le dispositif de coupe (60).

5. Dispositif de pelage d'étiquette (30) selon la revendication 1, dans lequel le rail de dispositif de coupe (52a) comprend une partie de rainure (52d) s'étendant dans la première direction et ayant des ouvertures aux deux extrémités dans la première direction et au niveau d'un côté avant ;
dans lequel le rail de dispositif de coupe (52a) comprend une fente (52e) ouverte dans une position prédéterminée dans la première direction, dans lequel le dispositif de coupe (60) est exposé à travers la fente (52e) vers le récipient d'échantillon (25) ; dans lequel le rail de dispositif de coupe (52a) supporte le dispositif de coupe (60) au niveau des deux côtés de la fente (52e) alors qu'une partie du dispositif de coupe (60) est exposée à travers la fente (52e) vers le récipient d'échantillon (25) de sorte que les deux côtés du dispositif de coupe (60) sont maintenus par le rail de dispositif de coupe (52a).

6. Dispositif de pelage d'étiquette (30) selon la revendication 5, dans lequel le dispositif de coupe (60) est déplacé vers le côté de récupération selon une distance prédéterminée, chaque fois que le procédé de pelage est réalisé un nombre de fois prédéterminé, déplaçant ainsi de manière séquentielle une partie de la lame positionnée dans la fente (52e) qui réalise le procédé de pelage.
